# EUROPÄISCHE PATENTSCHRIFT

(11) **EP 1 733 224 B1**
(45) Veröffentlichungstag und Bekanntmachung des Hinweises auf die Patenterteilung: **20.06.2007**
(21) Anmeldenummer: 05806423.9
(22) Anmeldetag: 19.10.2005
(51) Int. Cl.: G01N 29/04, G01N 29/22, G01N 29/27, G01N 29/24, G01N 29/44

(54) **VERFAHREN UND VORRICHTUNG ZUR ULTRASCHALLPRÜFUNG VON OBERFLÄCHENFEHLERN, WIE BSPW. RISSE, AUSBRÜCHE U. DGL. AN EINER WALZE EINES WALZWERKS**
METHOD AND DEVICE FOR ULTRASONIC DETECTION OF SURFACE DEFECTS SUCH AS CRACKS, FRACTURES AND THE LIKE ON A ROLLING MILL ROLLER
PROCEDE ET DISPOSITIF POUR LA DETECTION ULTRASONORE DE DEFAUTS DE SURFACE, TELS QUE FISSURES, CREUX ET ANALOGUES SUR UN CYLINDRE DE LAMINOIR

(30) Priorität: 20.10.2004 DE 102004051020
(43) Veröffentlichungstag der Anmeldung: 20.12.2006
(73) Patentinhaber: SMS Demag AG, 40237 Düsseldorf (DE)
(72) Erfinder: FIGGE, Dieter, 45147 Essen (DE)
(74) Vertreter: Klüppel, Walter
(86) Internationale Anmeldenummer: PCT/EP2005/011225
(87) Internationale Veröffentlichungsnummer: WO 2006/042748

(56) Entgegenhaltungen:
- GB-A- 1 561 811
- US-A- 3 868 847
- US-A- 4 423 636
- US-A- 5 417 114
- US-A- 6 105 431
- US-B1- 6 341 525
- KOMSKY I N: "Rolling dry-coupled transducers for ultrasonic inspections of aging aircraft structures" HEALTH MONITORING AND SMART NONDESTRUCTIVE EVALUATION OF STRUCTURAL AND BIOLOGICAL SYSTEMS III 15-17 MARCH 2004 SAN DIEGO, CA, USA, Bd. 5394, Nr. 1, 17. März 2004 (2004-03-17), Seiten 201-209, XP002370280 Proceedings of the SPIE - The International Society for Optical Engineering SPIE-Int. Soc. Opt. Eng USA ISSN: 0277-786X

## Beschreibung

Die Erfindung betrifft ein Verfahren und eine Vorrichtung zum Ermitteln von Oberflächenfehlern, wie bspw. Risse, Ausbrüche u. dgl., an einer Walze eines Walzwerks, insbesondere an Arbeitswalzen, die mit Stützwalzen in Ständerholmen gelagert sind durch Anwenden von Ultraschallwellen.

Auf dem Walzwerkssektor ist es üblich, die Arbeitswalzen in Warmbandstraßen und Kaltwalzwerken nach einer vorherbestimmten Einsatzzeit zu wechseln, die durch den betreffenden Walzwerkstoff und weitere Parameter des Welzens bestimmt wird. Der sich ergebende Zeitfaktor ist jedoch nicht auf gravierende Defekte an der jeweiligen Walze abgestimmt. Mangels einer anderweitigen genauen Diagnose werden die Arbeitswalzen oft viel zu früh gewechselt. Dadurch entstehen wirtschaftliche Nachteile.

Aus der DE 198 49 102 C1 sind ein Verfahren und eine Vorrichtung zum zerstörungsfreien Prüfen von Gegenständen auf oberflächenoffenen und / oder oberflächennahen Fehlstellen im Gefüge mittels Rayleigh-Wellen bekannt. Die Einstrahlungswinkel (α) sind hierbei auf 1,04 ± 0,2° des Winkels eingestellt, der sich aus dem Quotienten der Schallgeschwindigkeit des Mediums vor der Oberfläche und der Geschwindigkeit der Rayleigh-Welle im Gegenstand bzw. Prüfobjekt ergibt.

Die Anwendung dieses Verfahrens auf Walzen in Walzgerüsten ist jedoch schon wegen der Gestaltung der Verfahrensgrundlagen und der vorgeschlagenen Vorrichtung nicht möglich.

Die US 4 423 636 offenbart ein Prüfverfahren, bei dem Ultraschall über einen Schallwellen-Übertrager in eine zu prüfende Walze eingeleitet und an anderer Stelle mit einem Empfänger wieder empfangen wird. Zur Schatteinleitung bzw. Abnahme sind plattenförmige Elemente vorgesehen, die in Kontakt mit der Walzenoberfläche gebracht werden.

Die grundsätzliche Möglichkeit, eine zerstörungsfreie Prüfung mittels Ultraschallwellen durchzuführen, ist in der US 6 105 431 offenbart. Dort werden die Schallwellen unter Winkel in das Prüfgut eingeleitet und an einem vom Schallwellen-Übertrager entfernten Ort wieder empfangen.

Ähnliche Lösungen sind aus der US 6 341 525, aus der GB 1 561 811 A, aus der US 5 417 114, aus der US 3 868 847 und aus dem Beitrag von I. Komsky "Rolling dry-coupled transducers for ultrasonic inspections of aging aricraft structures" in Health Monitoring and Smart Nondestructive Evaluation of Structural and Biological Systems III 15-17 March 2004 San Diego, CA, USA, Bd. 5394, Nr. 1, 17 bekannt.

Der Erfindung liegt die Aufgabe zugrunde, das an und für sich bekannte Ultraschall-Prüfverfahren auf in ihrer Betriebslage befindliche langgestreckte Bauteile von Walzwerken, nämlich auf die verschleißgefährdeten Walzen, anwendbar zu machen und einfach zu gestalten.

Die gestellte Aufgabe wird erfindungsgemäß dadurch gelöst, dass die zu detektierende Walze in eingebauter Lage geprüft wird, wobei erzeugte Ultraschall-Transversalwellen ( sog. Scherwellen) mit einer Frequenz von ca. 0,5 - 2 MHz an einem ersten Walzenende eingeleitet und am zweiten Walzenende empfangen werden und wobei während des Messvorgangs ein Ultraschallwellen-Übertrager und ein Ultraschallwellen-Empfänger für die Zeit der Prüfung fest auf die Walzenoberfläche angepresst werden. Bei Transversalwellen ist die Schallgeschwindigkeit ca. 50% geringer als bei Longitudinalwellen. Damit ist auch eine Verringerung der Wellenlänge verbunden, so dass noch sehr kleine Fehlerstellen erfasst werden können. Als Fehlerstellen im Bereich der Walzenoberfläche sind Risse und Haarrisse und Ausbrüche mit Abmessungen von 0,6 x 0,6 mm anzusehen. Die Risse werden mit einer Breite von 50 µm und einer Tiefe von 10 µm angenommen. Die Frequenz von 0,5 - 2 MHz stellt einen Kompromiss zwischen einer maximalen Messtiefe und einer normalen Auflösung zum Erkennen auch kleiner Fehlstellen dar. Die Anordnung des Schallwellen-Übertragers an einem Walzenende und des Schallwellen-Empfängers an dem anderen Walzenende erfordert die geringste Energieaufnahme. An den Grenzflächen solcher Fehlerstellen treten Änderungen der akustischen Eigenschaften auf, die messtechnisch zu erfassen sind.

### Die prüfbaren Werkstoffe der Walzen sind insbesondere:

Stahlwalze für Kaltwalzwerke: Die Schalldurchlässigkeit bei geschmiedetem Stahl ist wegen seiner feinkörnigen Struktur besonders hoch.
Walzen aus Stahlguss: Der Aufbau ist geringfügig grobkörniger gegenüber Schmiedestahl; der Werkstoff ist bei Herabsetzung der Prüffrequenz jedoch noch gut prüfbar. Solche Walzen werden bspw. als Hochchromwalzen für die ersten Walzgerüste von Warmband-Fertigwalzstraßen eingesetzt.
Walzen aus "Indefinite Chill": Die Walzen bestehen im Kern aus Sphäroguss und der Mantel aus Schalenhartguss. Dieser Walzen-Typ ist schwer prüfbar wegen der vorhandenen Grafit-Einschlüsse. Dadurch kann eine hohe Schallstreuung eintreten. Es werden für die Prüfung Ultraschall-Frequenzen kleiner 1 MHz vorgeschlagen. Diese Art der Walzwerks-Walze wird als Verbundgusswalze für die letzten Walzgerüste einer Warmband-Fertigwalzstraße eingesetzt. Stützwalzen aus Schmiedestahl: Die Prüfmöglichkeit ist durch Ultraschall bei Frequenzen um 1 MHz sehr günstig.

Eine Ausgestaltung besteht darin, dass der Ultraschallwellen-Übertrager und der Ultraschallwellen-Empfänger radial am Ballenrand, nahe dem im Ständerlager gehaltenen Walzenzapfen angesetzt werden.

Eine Verbesserung besteht darin, dass während des Aufsetzens des Ultraschallwellen-Übertragers und des Ultraschallwellen-Empfängers die zu detektierende Walze stillgesetzt und nach dem abgeschlossenen Aufsetzvorgang um ca. zwei Umdrehungen weitergedreht wird. Nach dem Prüfvorgang können die Geräte wieder weg geschwenkt werden. Die vorhandenen Walzgutführungen und die Kühleinrichtungen werden durch die Geräte nicht behindert.

Eine Weiterbildung ist dadurch gegeben, dass die Ultraschallwellen über ein Piezo-Element durch einen Kernteil aus transparentem Kunststoff und eine angrenzende Füllung aus Silikon auf einen rollenförmigen Kontaktkörper aus Stahl geleitet werden, der auf die Walzenoberfläche außerhalb des Walzenballens angepresst wird. Das Piezoelement dient zur Bündelung der Wellenschar und damit zur gezielten Führung der Ultraschallwellen in die vorgegebene Richtung.

Zur leitenden Übertragung der eingehenden Ultraschallwellen ist vorgesehen, dass auf dem rollenförmigen Kontaktkörper außen auf der Lauffläche eine lridium-Schicht aufgebracht ist.

Eine weitere vorteilhafte Maßnahme ist, dass der Prüfvorgang ohne Walzgut zwischen den Arbeitswalzen durchgeführt wird. Der Prüfvorgang kann nach einem Wechsel des Walzgutes oder in einer vorgesehenen Pause durchgeführt werden.

Nach weiteren Schritten ist vorgesehen, dass die Ultraschallwellen unter einem spitzen Winkel in die Walzenoberfläche eingeleitet werden und nur die Komponente in Richtung der Walzenoberfläche ausgenutzt wird.

Die Vorrichtung zur Ermittlung von Oberflächenfehlern, wie bspw. Risse, Ausbrüche u. dgl., an einer Walze eines Walzwerks, insbesondere an Arbeitswalzen, die mit Stützwalzen in Ständerholmen gelagert sind, bei Anwendung von Ultraschall, löst die gestellte Aufgabe erfindungsgemäß dadurch, dass in den Ständerholmen jeweils aus einer Parkstellung ein in eine Prüfstellung oder umgekehrt schwenkbarer Halter gelagert ist, der jeweils einen Ultraschallwellen-Übertrager oder einen Ultraschallwellen-Empfänger trägt, wobei die Halter jeweils mittels eines Antriebs auf eine bestimmbare Anpresskraft einstellbar sind. Dadurch können nicht nur verschiedene Walzendurchmesser entsprechend deren Verschleiß oder Nacharbeitung geprüft werden, sondern auch immer die Anpresskraft in geeigneter Größe aufrechterhalten werden.

Nach der weiteren Erfindung ist an den Press-Enden der Schwenkarme jeweils ein rollenförmiger Kontaktkörper aus Stahl angeordnet. Bei unterschiedlichen Walzendurchmessern ändert sich nur geringfügig der Auftreffwinkel zur Walzenoberfläche.

Der Kontaktkörper schafft die Voraussetzung für die gleichmäßige Übertragung der Ultraschallwellen auf die Stahlwalze und deren Weiterleitung vom Übertrager zum Empfänger. Dafür weist vorteilhafterweise der Kontaktkörper einen stationären Kernteil aus Kunststoff auf, der über eine Kupplung ( bspw. eine Oldham-Kupplung) mit einem Kopfgehäuse drehfest verbunden ist, wobei der Kernteil leichtgängig in dem rollenförmigen Kontaktkörper drehgelagert ist und wobei in dem Kontaktkörper ein elektrisch angeschlossener Wellenübertrager bzw.

Wellenempfänger angeordnet ist. Die Vorrichtung schafft dadurch eine bündelweise Wellenbildung und Weiterleitung innerhalb der Walze.

Eine Verbesserung sieht vor, dass der rollenförmige Kontaktkörper außen mit Iridium beschichtet ist. Dadurch wird die Übertragungsfähigkeit von Ultraschallwellen durch die Kontaktrolle auf die zu prüfende Walze gesteigert.

Entsprechend den sonst üblichen flüssigen Kopplungsmedien, die an der eingebauten Walze nicht vorgesehen werden können, wird vorgeschlagen, dass der Ringraum zwischen dem Rollen-Kontaktkörper und dem stationären Kernteil aus Kunststoff mit Silikon zur akustischen Kopplung ausgefüllt ist.

Es wird ferner eine elektrisch / elektronische Schaltung zur Ermittlung von Oberflächenfehlern, wie bspw. Risse, Ausbrüche u. dgl., an einer Walze eines Walzwerks vorgeschlagen, insbesondere an Arbeitswalzen, die mit Stützwalzen in Ständerholmen drehgelagert sind durch Anwendung von Ultraschallwellen.

Diese Schaltung löst die gestellte Aufgabe dadurch, dass ein Ultraschallwellen-Übertrager an einem Ultraschall-Generator angeschlossen und über die Walze mit einem Ultraschallwellen-Empfänger verbunden ist, der an einen Empfänger-Verstärker und an einen Vergleicher angeschlossen ist, dass ein Speicher für Muster-Messsignale mit einem parallelen Verstärker für die Muster und mit dem Vergleicher verbunden ist und dass in einem an den Vergleicher angeschlossenen Fehlersignal-Erzeuger ein vorgegebenes Muster-Messsignal erzeugt wird.

Die Schaltung ist dahingehend erweitert, dass der Fehlersignal-Erzeuger an ein Registriergerät mit Speicher angeschlossen ist.

Eine Ausgestaltung sieht außerdem vor, dass an das Registriergerät für ein detektiertes Muster-Messsignal eine Weiterschaltung auf ein nächstfolgendes oder vorhergehendes Muster-Messsignal angeschlossen ist.

In der Zeichnung sind Ausführungsbeispiele der Erfindung dargestellt, die nachstehend näher erläutert werden.
Es zeigen:
- Fig. 1: eine Vorderansicht eines Walzwerks in Walzrichtung unter Wiedergabe eines Quartowalzgerüstes,
- Fig. 2: einen Querschnitt zu Fig. 1 mit einem Ultraschallwellen-Übertrager und einem Ultraschallwellen-Empfänger,
- Fig. 3: einen Teilquerschnitt durch den Halter mit Anpressmittel für den Ultraschallwellen-Übertrager oder Ultraschallwellen-Empfänger,
- Fig. 4: einen Querschnitt durch den Ständerholm mit dem Halter in aufgesetzter Position,
- Fig. 5: eine Wellenschar von Ultraschallwellen,
- Fig. 6: einen Querschnitt durch ein Gelenk des Halters,
- Fig. 7: einen Querschnitt durch eine aufgesetzte, am Halter befestigte Stahlrolle mit einem Teil des Wandlers,
- Fig. 8: einen Querschnitt durch eine weitere Ausführungsform des Halters und
- Fig. 9: ein Blockschaltbild für den Funktionsablauf eines oder mehrerer Prüfvorgänge.

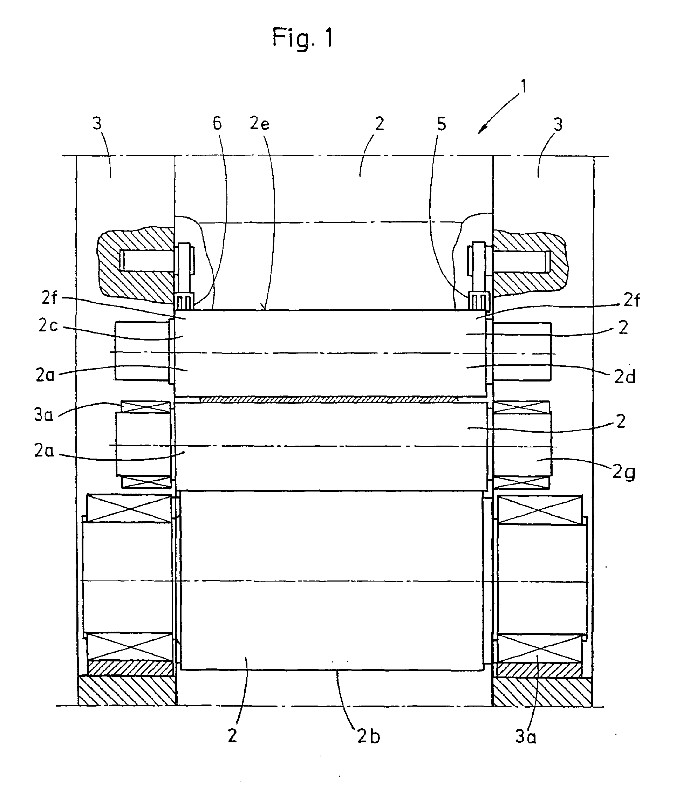

In Fig. 1 ist ein Walzwerk 1, bspw. ein Quartowalzgerüst, gezeigt. Das Walzwerk 1 besitzt vier Walzen 2, zwei Arbeitswalzen 2a und zwei diese führende Stützwalzen 2b.

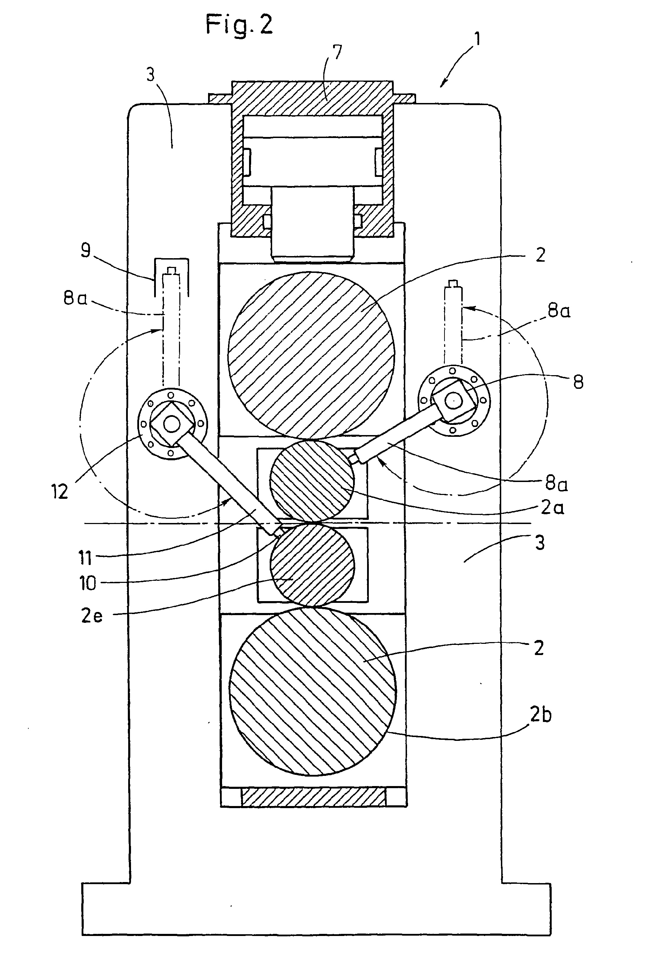

Die Walzen 2 sind in Ständerholmen 3 mittels Ständerlagern 3a drehgelagert. Die Walzen 2 sind mittels hydraulischen Anstellzylindern 7 anstellbar, die jedoch während eines Prüfvorgangs drucklos gehalten werden, also nicht wirksam sind.
Für die obere Arbeitswalze 2a ist ein Schwenkarm 8a ( Fig. 2) im Ständerholm 3 gelagert, der hochgeschwenkt in eine Parkstellung 9 und abgeschwenkt mit seinem Übertragungskopf 10 in Prüfstellung 11 geschwenkt wird. In der Prüfstellung 11 wird der Übertragungskopf 10 für die Übertragung von Schwingungen fest auf den Ballenrand 2f an einem ersten Walzenende 2c ( Fig. 1) und an einem zweiten Walzenende 2d an der Walzenoberfläche 2e in der Nähe des Walzenzapfens 2g gepresst. Mittel für das Führen und Kühlen von Walzgut werden dabei nicht beeinträchtigt und können in ihrer betriebsfähigen Anordnung verbleiben.

Gemäß Fig. 2 werden die Halter 8 mit den Übertragungsköpfen 10 in ihrer Parkstellung 9 leicht gegen die widrigen Umfeld-Verhältnisse geschützt. Für die Detektierung der oberen Arbeitswalze 2a und der unteren Arbeitswalze 2a sind jeweils zwei solcher Halter 8 vorgesehen.

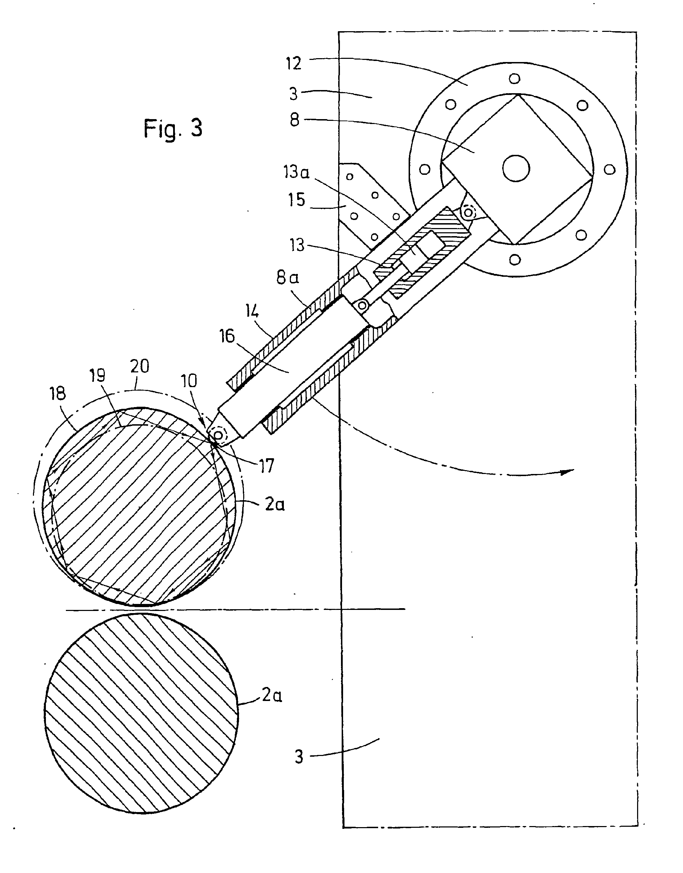

In Fig. 3 ist einer der Schwenkarme 8a vergrößert gezeichnet und in einer Schwenk-lagerung 12 im Ständerholm 3 gehalten. Der Schwenkarm 8a ist Bestandteil des Halters 8. Innerhalb des Halters 8 ist ein Antrieb 13, bspw. ein Hydrozylinder 13a, an beiden Enden gelenkig gehalten. Das Gehäuse 14 kann gegen einen Anschlag 15 zur Fixierung einer immer wieder anzufahrenden Prüfstellung 11 angestellt werden. Der Hydrozylinder 13a ist im Gehäuse 14 mit einer verschiebbaren Stange 16 gelenkig verbunden, wobei die Stange 16 an ihrer Spitze den Übertragungskopf 10 trägt. Der Übertragungskopf 10 besteht aus einer Kontaktrolle 17. In der gezeichneten Stellung trifft der Übertragungskopf 10 auf die obere Arbeitswalze 2a mit einem mittleren Walzendurchmesser 18. Die Anstellrichtung der Stange 16 zeigt auf das Zentrum der Arbeitswalze 2a. Bei wechselnden Walzendurchmessern 19, 20, bspw. durch zwischenzeitliches Schleifen des Walzenballens, findet ein Ausgleich durch den Hub des Hydrozylinders 13a statt. Die Verwendung der Kontaktrolle 17 (aus Stahl) bewirkt nur eine zu vernachlässigende Verlagerung des Auftreffwinkels. Die Anpresskraft des Übertragungskopfes 10 wird durch den Hydrozylinder 13a kontrolliert.

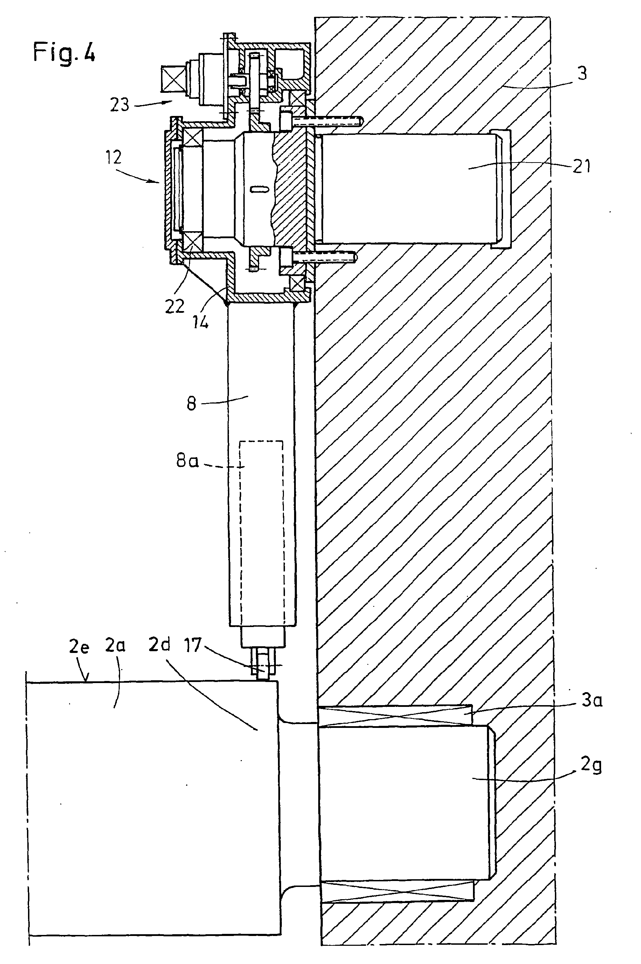

Die Anordnung des Halters 8 mit dem Schwenkarm 8a ist in Fig. 4 von der Seite gesehen gezeigt. Das Gehäuse 14 nimmt die Schwenklagerung 12 auf. Die Schwenk-lagerung 12 besteht aus einer im Ständerholm 3 befestigten Drehachse 21, um die das Gehäuse 14 über ein Drehlager 22 mittels eines am Ständerholm 3 abgestützten hydraulischen Schwenkantriebs 23 gedreht wird, um aus der Parkstellung 9 in die Prüfstellung 11 zu gelangen.

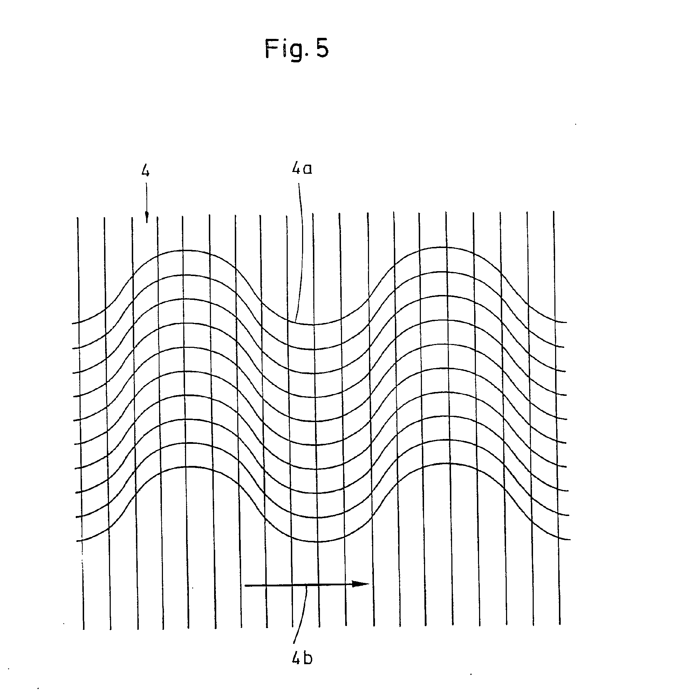

In Fig. 5 sind die für die Prüfung eingesetzten Ultraschallwellen 4 als Ultraschall-Transversalwellen 4a gezeigt, die sich in Richtung 4b bewegen.

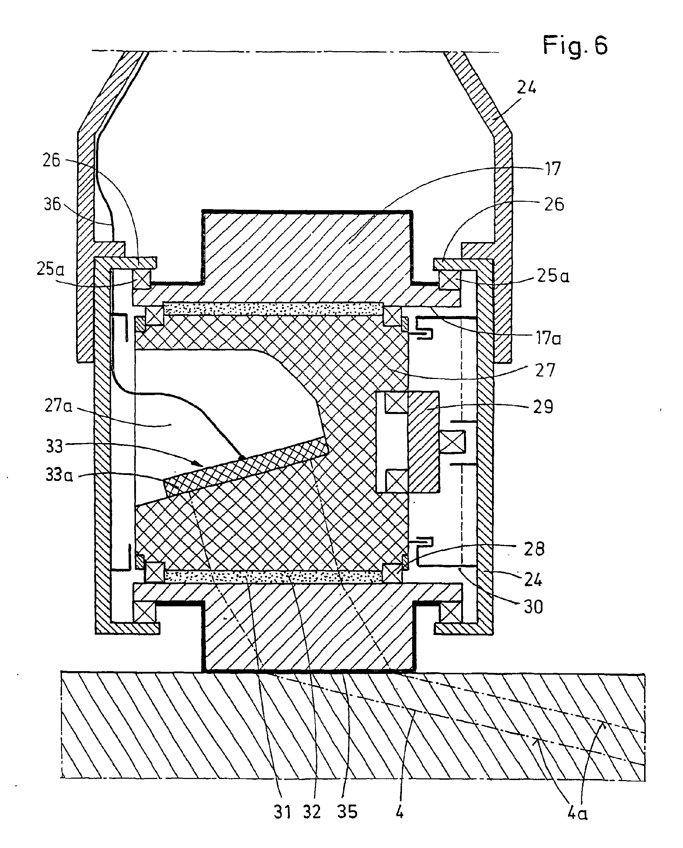

Gemäß Fig. 6 ist die Kontaktrolle 17 innerhalb eines Kopfgehäuses 24, das Teil des Gehäuses 14 sein kann, gelagert. Die Kontaktrolle 17 ist mittels Wälzlagern 25a, 25b drehgeführt. Die Wälzlager 25a, 25b sind gegen Flansche 26 des Kopfgehäuses 24 abgedichtet. Innerhalb der Rollenbohrung 17a ist ein Kernteil 27 aus transparentem, glasähnlichen Kunststoff ( bspw. das auf dem Markt befindliche Kunststoffglas) angeordnet, der in einer Halterung, bestehend aus vier abgedichteten Lagern 28 und einer Kupplung 29, vorzugsweise einer Oldham-Kupplung, gehalten ist. Der Kernteil 27 aus Kunststoff ist über eine berührungslose Abdichtung 30 isoliert und geschützt. In den entstehenden Ringraum 31 zwischen der Kontaktrolle 17 und dem Kernteil 27 aus Kunststoff ist eine Füllung 32 als ringförmige Schicht aus Silikon für die akustische Kopplung eingebracht. Innerhalb eines Hohlraums 27a befindet sich als Teil des Wellenübertrager 33 ( bzw. Wellenempfängers) ein Piezo-Element 33a.

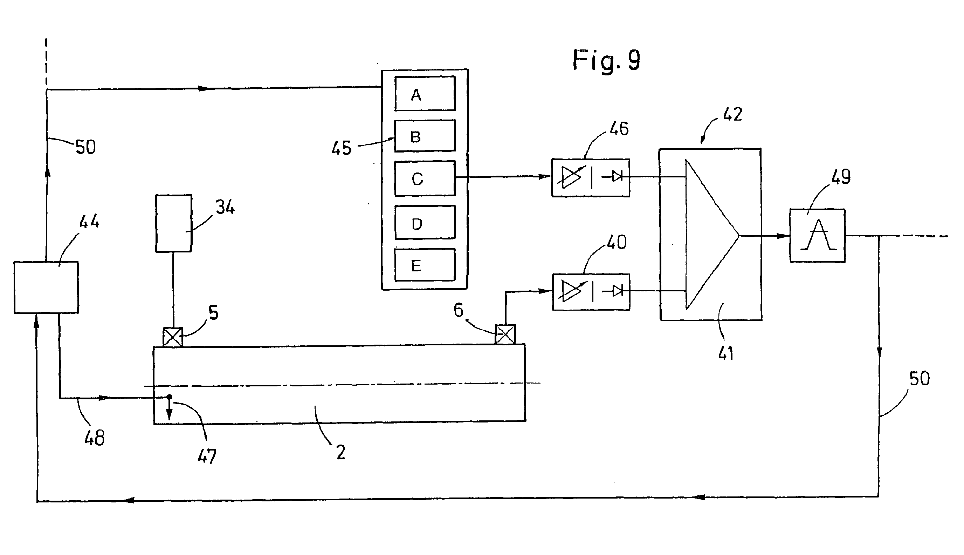

Die Übertragung von in einem Ultraschall-Generator 34 ( vgl. Fig. 9) erzeugten Ultraschallwellen 4 erfolgt vom Piezo-Element 33a durch den Kernteil 27 aus Kunststoff und die Füllung 32 in die Kontaktrolle 17, wobei um deren Umfang eine Iridium-Schicht 35 aufgelegt ist, in die Walze 2a ( aus Stahl) und wobei die Kontaktrolle 17 fest aufgepresst wird. Dabei entsteht eine doppelte Brechung der Ultraschallwellen 4.

Das Piezo-Element 33a ist über ein Kabel 36 mit dem Ultraschall-Generator 34 verbunden (Fig. 6, 8 und 9 ).

Das Füllmittel 32 aus Silikon ist neben anderen zähen Flüssigkeiten ein Kopplungsmittel für die Ultraschallwellen 4. Die Ultraschallwellen 4 treten aus dem Piezo-Element 33a aus und durchlaufen den Kernteil 27 aus (transparentem) Kunststoff bis in die Füllung 32 aus Silikon. An der Austrittsebene zur Kontaktrolle 17 aus Stahl werden die Ultraschallwellen 4 zum ersten Mal gebrochen. Danach gelangen die Ultraschallwellen 4 als Ultraschall-Transversalwellen 4a über die Iridium-Schicht 35 auf die Walzenoberfläche 2e und werden dort zum zweiten Mal gebrochen und in den zu prüfenden Stahl der Arbeitswalze 2a eingeleitet ( vgl. Fig. 6, rechts unten). Eine Längskomponente durchläuft die Walze 2 in Längsrichtung und stößt bei Vorhandensein auf Oberflächenfehler, wie bspw. Risse, Haarrisse, Ausbrüche u. dgl., die als Fehler ermittelt werden.

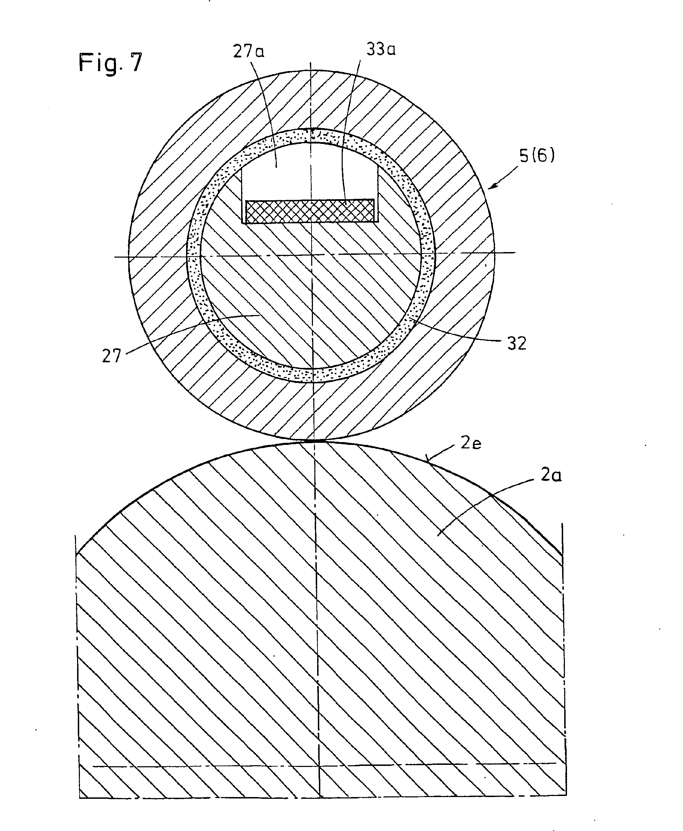

In Fig. 7 ist auf eine Arbeitswalze 2a aus Stahl der rollenförmige Kontaktkörper 17 aufgestützt, wobei um dessen Umfang die Iridium-Schicht 35 aufgebracht ist und die Kontaktrolle 17 fest aufgepresst wird. Dabei entsteht eine doppelte Brechung der Ultraschallwellen 4.

Das Piezo-Element 33a ist über ein Kabel 36 mit dem Ultraschall-Generator 34 verbunden (Fig. 9).

Das Füllmittel 32 aus Silikon ist neben anderen zähen Flüssigkeiten ein Kopplungsmittel für die Ultraschallwellen 4. Die Ultraschallwellen 4 treten aus dem Piezo-Element 33a aus und durchlaufen den Kernteil 27 bis in die Füllung 32 aus Silikon.

An der Austrittsebene zur Kontaktrolle 17 aus Stahl werden die Ultraschallwellen 4 zum ersten Mal gebrochen. Danach gelangen die Ultraschallwellen 4 über die Iridium-Schicht 35 auf die Walzenoberfläche 2e und werden zum zweiten Mal gebrochen.

Eine Längskomponente durchläuft die Walze 2 in Längsrichtung und stößt bei Vorhandensein auf Oberflächenfehler, wie bspw. Risse, Haarrisse, Ausbrüche u. dgl., die als die gesuchten Fehler ermittelt werden.

In Fig. 7 ist auf die Arbeitswalze 2a die Kontaktrolle 17 aufgestützt. Der Kernteil 27 (aus transparentem Kunststoff) ist von der Füllung 32 aus Silikon für die akustische Kopplung umgeben und in dem Hohlraum 27a befindet sich ein Wellenübertrager / Wellenempfänger 33, die aus einem Piezo-Element 33a bestehen, das im Querschnitt gezeigt ist. Der Ultraschallwellen-Übertrager 5 (oder der Ultraschallwellen-Empfänger 6) setzt momentan auf der Walzenoberfläche 2e auf und wird anschließend von der bewegten Walzenoberfläche 2e mitgenommen und in Drehung versetzt.

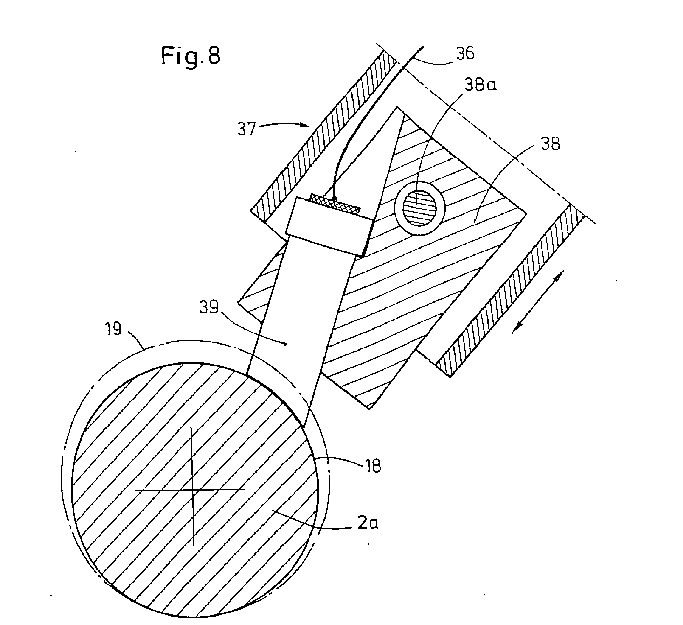

Fig. 8 zeigt eine alternative nicht erfindungsgemäße Ausführungsform. Der Ultraschallwellen-Übertrager 5 (bzw. der Ultraschallwellen-Empfänger 6, auf den die ausgehenden Wellen übertragen werden) ist in einen Schwenkkopf 37 eingebaut, der sich in die geeignete Winkellage selbsttätig einstellt. Dazu ist ein Träger 38 um eine Trägerachse 38a schwenkbar, ein länglicher Kontaktkörper 39 ist unter einem geeigneten Winkel an den mittleren Walzendurchmesser 18 und an den wechselnden Walzendurchmesser 19 angepasst. Anstelle der Füllung 32 aus Silikon kann Öl als Kopplungsmittel aufgegeben werden.

Das Prüfverfahren bzw. die Vorrichtung müssen nicht in allen Walzwerken einer Walzstraße verwendet werden. Es genügt, wenn das Walzwerk mit der größten Belastung ( mit der größten Stichabnahme ) geprüft wird, da dort eine hohe Wahrscheinlichkeit besteht, dass zuerst Rissbildungen stattfinden.

In Fig. 9 ist ein Blockschaltbild einer Vorrichtung zur Auswertung von gewonnenen
Signalbildern dargestellt. Der Ultraschallwellen-Übertrager 5 ist an den Ultraschall-Generator 34 angeschlossen und über die Walze 2 mit dem Ultraschallwellen-Empfänger 6 verbunden. Letzterer ist an einen Empfänger-Verstärker 40 und an einen Vergleicher 41 angeschlossen. Ein folgender Speicher-Oszillograf 42 erzeugt ein Fehlersignal bei einer Differenz zwischen zwei Signalen. Die Differenz kommt dadurch zustande, dass das Fehlersignal über eine Leitung 43 und ein Registriergerät 44 geführt wird und in einem Speicher 45 für Muster-messsignale A, B, C, D, E usw. ein nächstkommendes Vergleichsmuster ausgewählt und an einen Verstärker 46 für Muster weitergegeben wird. Sofern bei Vergleich im Vergleicher 41 keine Übereinstimmung festgestellt wird, ergeht bspw. bei Differenz ein Befehl an das Registriergerät 44 zum Weiterschalten auf ein nächstes Mustermesssignal A, B, C, D , E usw.. Nach Vergleichsende mit den vorhandenen Mustermesssignalen wird über eine Drehung 47 um einen festgelegten Winkel 48 ( Winkel ϕ) eine weitere Prüfung ausgeführt. Nach diesen Verfahren werden in dem Fehlersignal-Erzeuger 49 bei Nichtübereinstimmung der Signale durch eine Weiterschaltung 50 weitere Vergleichsvorgänge eingeleitet und ausgeführt.

### Bezugszeichenliste

- 1: Walzwerk
- 2: Walze
- 2a: Arbeitswalze
- 2b: Stützwalze
- 2c: erstes Walzenende
- 2d: zweites Walzenende
- 2e: Walzenoberfläche
- 2f: Ballenrand
- 2g: Walzenzapfen
- 3: Ständerholm
- 3a: Ständerlager
- 4: Ultraschallwellen
- 4a: Ultraschall-Transversalwellen
- 4b: Richtung der Fortpflanzung
- 5: Ultraschallwellen-Übertrager
- 6: Ultraschallwellen-Empfänger
- 7: Anstellzylinder
- 8: Halter
- 8a: Schwenkarm
- 9: Parkstellung
- 10: Übertragungskopf
- 11: Prüfstellung
- 12: Schwenklagerung
- 13: Antrieb
- 13a: Hydrozylinder
- 14: Gehäuse
- 15: Anschlag
- 16: Stange
- 17: Kontaktrolle
- 17a: Rollenbohrung
- 18: mittlerer Walzendurchmesser
- 19: wechselnder Walzendurchmesser
- 20: wechselnder Walzendurchmesser
- 21: Drehachse
- 22: Drehlager
- 23: Schwenkantrieb
- 24: Kopfgehäuse
- 25a: Wälzlager
- 25b: Wälzlager
- 26: Flansch
- 27: Kernteil aus (transparentem) Kunststoff
- 27a: Hohlraum
- 28: abgedichtetes Lager
- 29: (Oldham-) Kupplung
- 30: Abdichtung
- 31: Ringraum
- 32: Füllung aus Silikon
- 33: Wellenübertrager / Wellenempfänger
- 33a: Piezo-Element
- 34: Ultraschall-Generator
- 35: Iridium-Schicht
- 36: Kabel
- 37: Schwenkkopf
- 38: Träger
- 38a: Trägerachse
- 39: Kontaktkörper
- 40: Empfänger-Verstärker
- 41: Vergleicher
- 42: Speicher-Oszillograf
- 43: Leitung
- 44: Registriergerät
- 45: Speicher
- 46: Verstärker für Muster
- 47: Drehung um Winkel ϕ
- 48: festgelegter Winkel
- 49: Fehlersignal-Erzeuger
- 50: Weiterschaltung

## Patentansprüche

1. Verfahren zum Ermitteln von Oberflächenfehlern, wie bspw. Risse, Ausbrüche u. dgl., an einer Walze (2) eines Walzwerks (1), insbesondere an Arbeitswalzen (2a), die mit Stützwalzen (2b) in Ständerholmen (3) gelagert sind durch Anwendung von Ultraschallwellen (4),
**dadurch gekennzeichnet,**
**dass** die zu detektierende Walze (2) in eingebauter Lage geprüft wird, wobei erzeugte Ultraschall-Transversalwellen (4a) mit einer Frequenz von ca. 0,5 - 2 MHz an einem ersten Walzenende (2c) eingeleitet und am zweiten Walzenende (2d) empfangen werden, wobei während des Messvorgangs ein Ulträschallwellen-Übertrager (5) und ein Ultraschallwellen-Empfänger (6) für die Zeit der Prüfung fest auf die Walzenoberfläche (2e) angepresst werden und wobei die Ultraschallwellen (4) über ein Piezo-Element (33a) durch einen Kernteil (27) aus transparentem Kunststoff und eine angrenzende Füllung (32) aus Silikon auf einen rollenförmigen Kontaktkörper (17) aus Stahl geleitet werden, der auf die Walzenoberfläche (2e) außerhalb des Walzenballens angepresst wird.

2. Verfahren nach Anspruch 1,
**dadurch gekennzeichnet,**
**dass** der Ultraschallwellen-Übertrager (5) und der Ultraschallwellen-Empfänger (6) radial am Ballenrand (2f) nahe dem im Ständerlager (3a) gehaltenen Walzenzapfen (2g) angesetzt werden.

3. Verfahren nach einem der Ansprüche 1 oder 2,
**dadurch gekennzeichnet,**
**dass** während des Aufsetzens des Ultraschallwellen-Übertragers (5) und des Ultraschallwellen-Empfängers (6) die zu detektierende Walze (2) stillgesetzt und nach dem abgeschlossenen Aufsetzvorgang um ca. zwei Umdrehungen weitergedreht wird.

4. Verfahren nach einem der Ansprüche 1 bis 3,
**dadurch gekennzeichnet,**
**dass** auf dem rollenförmigen Kontaktkörper (17) außen auf der Lauffläche eine Iridium-Schicht (35) aufgebracht ist.

5. Verfahren nach einem der Ansprüche 1 bis 4,
**dadurch gekennzeichnet,**
**dass** der Prüfvorgang ohne Walzgut zwischen den Arbeitswalzen (2a) durchgeführt wird.

6. Verfahren nach einem der Anspruche 1 bis 5,
**dadurch gekennzeichnet,**
**dass** die Ultraschallwellen (4) unter einem spitzen Winkel in die Walzenoberfläche (2e) eingeleitet werden und nur die Komponente in Richtung der Walzenoberfläche (2e) ausgenutzt wird.

7. Vorrichtung zur Ermittlung von Oberflächenfehlern, wie bspw. Risse; Ausbrüche u. dgl., an einer Walze (2) eines Walzwerks (1), insbesondere an Arbeitstwalzen (2a), wobei die Walze (2) bei Anwendung von Ultraschallwellen (4) mit Stützwalzen (2b) in Ständerholmen (3) gelagert ist, wobei in den Ständerholmen (3) jeweils aus einer Parkstellung (9) ein in eine Prüfskellung (11) oder umgekehrt schwenkbarer Halter (8) gelagert ist, der jeweils einen Ultraschallwellen-Übertrager (5) oder einen Ultraschallwellen-Empfänger (6) trägt und wobei die Halter (8) jeweils mittels eines Antriebs (13) auf eine bestimmbare Anpresskraft einstellbar sind,
**dadurch gekennzeichnet,**
**dass** der jeweils eine Ultraschallwellen überträger (5) oder eine Ultraschallwellen empfänger (6) an Press-Enden von Schwenkarmen (8a) die Bestandteil der schwenkbaren Halter (8) sind jeweils eine Kontaktrolle (17) aus Stahl umfasst, wobei die Kontaktrolle (17) einen stationären Kernteil (27) aus Kunststoff aufweist und wobei der Ringraum (31) zwischen der Kontaktrolle (17) und dem stationären Kernteil (27) aus Kunststoff mit Silikon (32) zur akustischen Kopplung ausgefüllt ist.

8. Vorrichtung nach Anspruch 7,
**dadurch gekennzeichnet,**
**dass** der stationäre Kernteil (27) aus Kunststoff über eine Kupplung (29) mit einem Kopfgehäuse (24) drehfest verbunden ist, wobei der Kernteil (27) leichtgängig in der Kontaktrolle (17) drehgelagert ist und wobei in der Kontaktrolle (17) ein elektrisch angeschlossener Wellenübertrager (33) bzw. Wellenempfänger (33) angeordnet ist.

9. Vorrichtung nach Anspruch 7 oder 8,
**dadurch gekennzeichnet,**
**dass** die Kontaktrolle (17) außen mit Iridium (35) beschichtet ist.

10. Vorrichtung nach einem der Ansprüche 7 bis 9,
**dadurch gekennzeichnet,**
**dass** sie weiterhin eine Schaltung aufweist, wobei ein Ultraschallwellen-Übertrager (5) an einen Ultraschall-Generator (34) angeschlossen und über die Walze (2) mit einem Ultraschallwellen-Empfänger (6) verbunden ist, der an einen Empfänger-Verstärker (40) und an einen Vergleicher (41) angeschlossen ist, wobei ein Speicher (45) für Muster-Messsignale (A, B, C, D, E usw.) mit einem parallelen Verstärker (46) für die Muster und mit dem Vergleicher (41) verbunden ist und wobei in einem an den Vergleicher (41) angeschlossenen Fehlersignal-Erzeuger (49) ein vorgegebenes Muster-Messsignal (A, B. C, D, E usw.) erzeugt wird.

11. Vorrichtung nach Anspruch 10,
**dadurch gekennzeichnet,**
**dass** der Fehlersignal-Erzeuger (49) an ein Registriergerät (44) mit Speicher (45) angeschlossen ist.

12. Vorrichtung nach den Ansprüchen 10 und 11,
**dadurch gekennzeichnet,**
**dass** an das Registriergerät (44) für ein detektiertes Muster-Messsignal (A, B, C, D, E usw.) eine. Weiterschaltung (50) auf ein nächstfolgendes oder vorhergehendes Muster-Messsighal (A, B, C, D, E usw.) angeschlossen ist.

## Claims

1. Method of determining surface faults, such as, for example, tears, break-outs and the like at a roll (2) of a rolling mill (1), particularly at working rolls (2a), which are mounted together with backing rolls (2b) in housing posts (3), by use of ultrasound waves (4), **characterised in that** the roll (2) to be detected is checked in installed position, whereby ultrasound transversal waves (4a) which are produced are introduced at a frequency of approximately 0.5 to 2 MHz at a first roll end (2c) and are received at the second roll end (2d), wherein during the measuring process an ultrasound wave transmitter (5) and an ultrasound wave receiver (6) are for the time of the check pressed firmly against the roll surface (2e) and wherein the ultrasound waves (4) are conducted through a core part (27) of transparent synthetic material by way of a piezo element (33a) and an adjoining filling (32) of silicon to a roller-shaped contact body (17) of steel, which is pressed against the roll surface (2e) outside the roll circumference.

2. Method according to claim 1, **characterised in that** the ultrasound wave transmitter (5) and the ultrasound wave receiver (6) are placed radially at the circumference edge (2f) near the roll pin (2g) mounted in the stand bearing (3a).

3. Method according to one of claims 1 and 2, **characterised in that** during fitting of the ultrasound wave transmitter (5) and the ultrasound wave receiver (6) the roll (2) to be detected is kept stationary and after the placing process is concluded is further rotated through approximately 2 revolutions.

4. Method according to one of claims 1 to 3, **characterised in that** an iridium layer (35) is coated on the roller-shaped contact body (17) externally on the running surface.

5. Method according to one of claims 1 to 4, **characterised in that** the checking process is carried out without rolling stock between the working rolls (2a).

6. Method according to one of claims 1 to 5, **characterised in that** the ultrasound waves (4) are introduced at an acute angle into the roll surface (2e) and only the component in the direction of the roll surface (2e) is utilised.

7. Device for determining surface faults, such as, for example, tears, break-outs and the like at a roll (2) of a rolling mill (1), particularly at working rolls (2a), wherein the roll (2) in the case of use of ultrasound waves (4) is mounted together with backing rolls (2b) in housing posts (3), wherein mounted each time in the housing posts (3) is a holder (8), which is pivotable from a parked setting (9) to a checking setting (11) and conversely and which carries each time an ultrasound wave transmitter (5) or an ultrasound wave receiver (6) and wherein the holders are adjustable in each instance by means of a drive (13) to a definable pressing force, **characterised in that** in each instance an ultrasound wave transmitter (5) or an ultrasound wave receiver (6) at press ends of pivot arms (8a), which are components of the pivotable holder (8), comprise a contact roller (17) of steel, wherein the contact roller (17) comprises a stationary core part (27) of plastics material and wherein the annular space (31) between the contact roller (17) and the stationary core part (27) of synthetic material is filled with silicon (32) for the acoustic coupling.

8. Device according to claim 7, **characterised in that** the stationary core part (27) of synthetic material is connected in rotationally fast manner by way of a coupling (29) with a head housing (24), wherein the core part (27) is rotatably mounted in the contact roller (17) to be easy-running and wherein an electrically connected wave transmitter (33) or wave receiver (33) is arranged in the contact roller (17).

9. Device according to claim 7 or 8, **characterised in that** the contact roller (17) is coated at the outside with iridium (35).

10. Device according to one of claims 7 to 9, **characterised in that** it further comprises a circuit, wherein an ultrasound wave transmitter (5) is connected with an ultrasound generator (34) and is connected by way of the roller (2) with an ultrasound wave receiver (6), which is connected with a receiver amplifier (40) and with a comparator (41), wherein a memory (45) for pattern measurement signals (A, B, C, D, E, etc.) is connected with a parallel amplifier (46) for the pattern and with the comparator (41) and wherein a predetermined pattern measuring signal (A, B, C, D, E, etc.) is generated in a fault signal generator (49) connected with the comparator (41).

11. Device according to claim 10, **characterised in that** the fault signal generator (49) is connected with a registration apparatus (44) with a memory (45).

12. Device according to claims 10 and 11, **characterised in that** a further circuit (50) to a next-succeeding or preceding pattern measuring signal (A, B, C, D, E, etc.) is connected with the registration apparatus (44) for a detected pattern measuring signal (A, B, C, D. E, etc.).

## Revendications

1. Procédé pour la détermination de défauts de surface, tels que par exemple des fissures, des creux et analogues sur un cylindre (2) d'un laminoir (1), en particulier sur des cylindres de travail (2a) qui sont logés avec des cylindres d'appui (2b) dans des longerons (3) de montants par l'utilisation d'ondes d'ultrasons (4), **caractérisé en ce que** les cylindres à étudier (2) sont testés dans une position montée, des ondes transversales d'ultrasons (4a) générées d'une fréquence d'environ 0,5-2 MHz étant introduites au niveau d'une première extrémité (2c) du cylindre et reçues au niveau de la deuxième extrémité (2d) du cylindre, un transmetteur d'ondes d'ultrasons (5) et un récepteur d'ondes d'ultrasons (6) étant pressés pendant le processus de mesure, sur la durée du test, solidement contre la surface (2e) du cylindre et les ondes d'ultrasons (4) étant guidées via un piézo-élément (33a) dans une partie centrale (27) en matériau synthétique transparent et un remplissage adjacent (32) en silicone sur un corps de contact en forme de rouleau (17) en acier, qui est pressé sur la surface (2e) du cylindre en dehors de la table du cylindre.

2. Procédé selon la revendication 1, **caractérisé en ce que** le transmetteur (5) d'ondes d'ultrasons et le récepteur (6) d'ondes d'ultrasons sont placés radialement sur le bord (2f) de la table, à proximité du tourillon (2g) du cylindre maintenu dans le palier (3a) du cylindre.

3. Procédé selon l'une quelconque des revendications 1 ou 2, **caractérisé en ce que**, pendant la mise en place du transmetteur (5) et du récepteur (6) des ondes d'ultrasons, le cylindre à étudier (2) est arrêté et est tourné d'environ deux tours à la fin du processus de mise en place.

4. Procédé selon l'une quelconque des revendications 1 à 3, **caractérisé en ce qu'**une couche d'iridium (35) est appliquée sur le corps de contact (17) en forme de rouleau, à l'extérieur, sur la surface de roulement.

5. Procédé selon l'une quelconque des revendications 1 à 4, **caractérisé en ce que** le processus de test est réalisé sans produit à laminer entre les cylindres de travail (2a).

6. Procédé selon l'une quelconque des revendications 1 à 5, **caractérisé en ce que** les ondes d'ultrasons (4) sont guidées sous un angle aigu dans la surface (2e) du cylindre et on n'utilise que la composante dans le sens vers la surface (2e) du cylindre.

7. Dispositif pour la détermination de défauts de surface, tels que par exemple des fissures, des creux et analogues sur un cylindre (2) d'un laminoir (1), en particulier sur des cylindres de travail (2a), le cylindre (2) étant logé, lors de l'utilisation d'ondes d'ultrasons (4) avec des cylindres d'appui (2b) dans des longerons de montants (3), un dispositif de fixation (8) étant logé dans les longerons des montants (3), pouvant être pivoté d'une position au repos (9) dans une position de test (11) ou inversement, ledit dispositif portant à chaque fois un transmetteur d'ondes d'ultrasons (5) ou un récepteur d'ondes d'ultrasons (6) et lesdits dispositifs de fixation (8) pouvant à chaque fois être réglés à une force de compression déterminable au moyen d'un dispositif d'entraînement (13), **caractérisé en ce qu'**à chaque fois un transmetteur (5) ou un récepteur (6) d'ultrasons aux extrémités de pression de bras pivotants (8a) qui font partie des dispositifs de fixation (8) pivotants comprend à chaque fois un rouleau de contact (17) en acier, le rouleau de contact (17) présentant un noyau (27) stationnaire en matériau synthétique et l'espace annulaire (31) entre le rouleau de contact (17) et le noyau (27) étant rempli d'un matériau synthétique en silicone (32) pour le couplage acoustique.

8. Dispositif selon la revendication 7, **caractérisé en ce que** le noyau stationnaire (27) en matériau synthétique est relié de manière à ne pas pouvoir tourner via un accouplement (29) avec un bâti de tête (24), le noyau (27) étant logé de manière à pouvoir tourner facilement dans le rouleau de contact (17) et un transmetteur (33) ou un récepteur d'ondes (33) raccordé électriquement étant disposé dans le rouleau de contact (17).

9. Dispositif selon la revendication 7 ou 8, **caractérisé en ce que** le rouleau de contact (17) est recouvert à l'extérieur d'iridium (35).

10. Dispositif selon l'une quelconque des revendications 7 à 9, **caractérisé en ce qu'**il présente en outre un commutateur, un transmetteur d'ondes d'ultrasons (5) étant raccordé à un générateur d'ultrasons (34) et via le cylindre (2) à un récepteur d'ondes d'ultrasons (6), qui est raccordé à un amplificateur de réception (40) et un comparateur (41), un accumulateur (45) pour les signaux de mesure modèle (A, B, C, D, E etc.) étant raccordé à un amplificateur parallèle (46) pour les modèles et le comparateur (41) et un signal de mesure modèle prédéfini (A, B, C, D, E etc.) étant généré dans un générateur de signaux de défaut (49) raccordé au comparateur (41).

11. Dispositif selon la revendication 10, **caractérisé en ce que** le générateur de signaux de défaut (49) est raccordé à un enregistreur (44) avec un accumulateur (45).

12. Dispositif selon les revendications 10 et 11, **caractérisé en ce qu'**un autre commutateur (50) vers un signal de mesure modèle (A, B, C, D, E etc.) consécutif ou préalable est raccordé à l'enregistreur (44) pour un signal de mesure modèle détecté (A, B, C, D, E etc.).
